# EUROPEAN PATENT SPECIFICATION

(11) **EP 4 108 379 B1**
(45) Date of publication and mention of the grant of the patent: **29.10.2025**
(21) Application number: 22178552.0
(22) Date of filing: 13.06.2022
(51) Int. Cl.: B23Q 1/52, B23D 45/12, B23K 37/04, B25B 1/20

(54) **PIPE ROTATING ARRANGEMENT**
ROHRDREHANORDNUNG
AGENCEMENT DE ROTATION DE TUYAU

(30) Priority: 21.06.2021 FI 20215722
(43) Date of publication of application: 28.12.2022
(73) Proprietor: Welner Oy, 90620 Oulu (FI)
(72) Inventor: Impiö, Markku, 90620 Oulu (FI)
(74) Representative: Kolster Oy Ab

(56) References cited:
- CN-U- 203 526 874
- CN-U- 209 006 969
- KR-B1- 102 201 898
- US-A- 2 679 939

## Description

### Field

The invention relates to a field of pipe rotating arrangements used in a processing of the pipe.

### Background

The pipe structures cause challenges to the pipe processing arrangements, especially if diameters of the pipes vary a lot. Rotating of the pipe in processing is often mandatory which also causes challenges to the pipe processing arrangements. Current pipe processing arrangements that are suitable for the pipes with different diameters and are also capable of rotating the pipe have many drawbacks. Structures of the current solutions are complex and the arrangements are hard to use.

Hence, there is a need for a sophisticated pipe rotating arrangement that can be used in the pipe processing.

CN209006969U discloses a bearing platform on which the preamble of claim 1 is based. The related bearing table is used for supporting pipes. The bearing table comprises a bearing table body and a supporting part arranged at the top of the bearing table body, the supporting part comprises a pair of supporting wheels which are oppositely arranged left and right so as to abut against the outer wall of the pipe in the circumferential direction, the straight line where rotating shafts of the supporting wheels are located faces forwards and backwards, and the bearing table is further provided with a distance adjusting mechanism for adjusting the distance between the two supporting wheels. According to the bearing table, the pipes can be supported, and in specific application scenes such as cutting and welding, the pipes can be rotationally adjusted through the supporting wheels so that the pipes can be located at proper machining positions, due to the fact that the distance between the supporting wheels is adjustable, the bearing table can adapt to supporting of pipes with different pipe diameters, and compatibility is good.

### Brief description

The present invention is defined by the subject matter of the independent claim.

Embodiments are defined in the dependent claims.

### List of drawings

Example embodiments of the present invention are described below, by way of example only, with reference to the accompanying drawings, in which
Figures 1, 2, 5, 6, 7, 8A and 8B illustrates a pipe rotating arrangement according to an embodiment of the invention; and
Figures 3 and 4 illustrate a roller belt according to an embodiment of the invention.

### Description of embodiments

The following embodiments are only examples.

Pipe rotating arrangements are used for supporting and rotating the pipes in a different kind of pipe processing. The pipe processing may refer to welding, cutting and/or grinding of the pipe, for example. Diameters of the pipes to be processed in the rotating arrangement may vary a lot. For example, the diameters of the pipes may be between 100mm - 2000mm which sets a lot of challenges for the rotating arrangements. There are many solutions available for supporting and rotating the pipes but structure of them are often very complex and therefore usability is not very good.

The pipe rotating arrangement according to the invention is aimed to alleviate the drawbacks of the know solution.

According to an aspect, there is provided a pipe rotating arrangement comprising a frame having at least two rollers configured to receive a pipe to be rotated wherein a distance between the at least two rollers is adjustable, and the arrangement further comprises a roller belt configured to tighten the pipe against the at least two rollers wherein the roller belt comprises a plurality of roller elements enabling rotation of the pipe when tightened against the rollers of the frame by the roller belt, wherein a distance between the roller elements on the roller belt vary such that the distance is smaller in vicinity of one end of the roller belt.

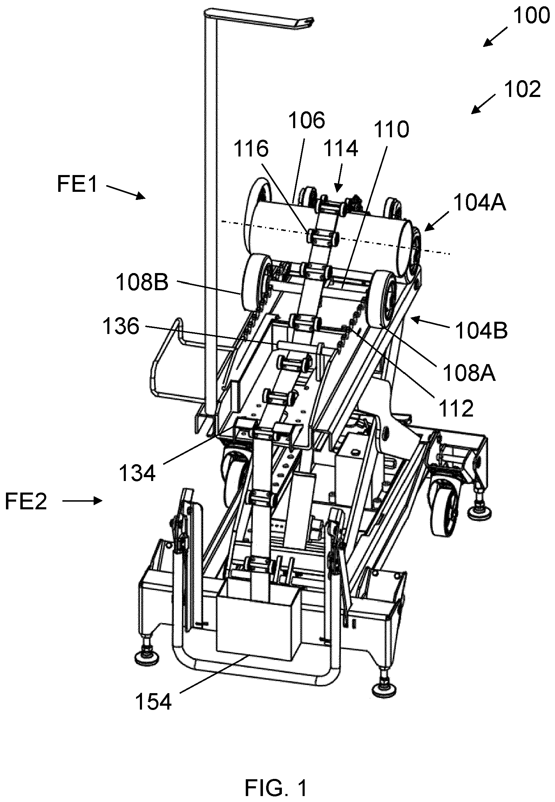

Referring to Figure 1, the pipe rotating arrangement 100 comprises the frame 102 having two or more rollers 104A - B. The rollers 104A - B are configured to receive the pipe 106 to be rotated by the arrangement 100 and the distance between the rollers is adjustable. In other words, distance between the rollers can be adjusted according to diameters of the pipes placed on the arrangement. Figure 1 illustrates how the pipe 106 can be set into the two rollers 104A - B. Adjustment of the distance make possible to use the arrangement for the pipes having different diameters. For example, if the diameter of the pipe is small, the rollers are placed closer to each other compared to a situation in which the diameter of the pipe is large. The rollers are rotative allowing rotation of the pipe about its centre axis (longitudinal axis) placed on the top of them. The centre axis is illustrated by a dash line in Figure 1. One roller may comprise a pair of wheels 108A - B such that the wheels are coupled together by an axle 110.

In an embodiment, the roller(s) are configured to allow rotational movement of the pipe and further movement of the pipe in a longitudinal direction (along the centre axis). The roller may rotate about its centre axis allowing the rotation of the pipe about the pipe's centre axis and further the roller may comprise a sub rollers allowing the movement of the pipe in the direction of the centre axis of the pipe.

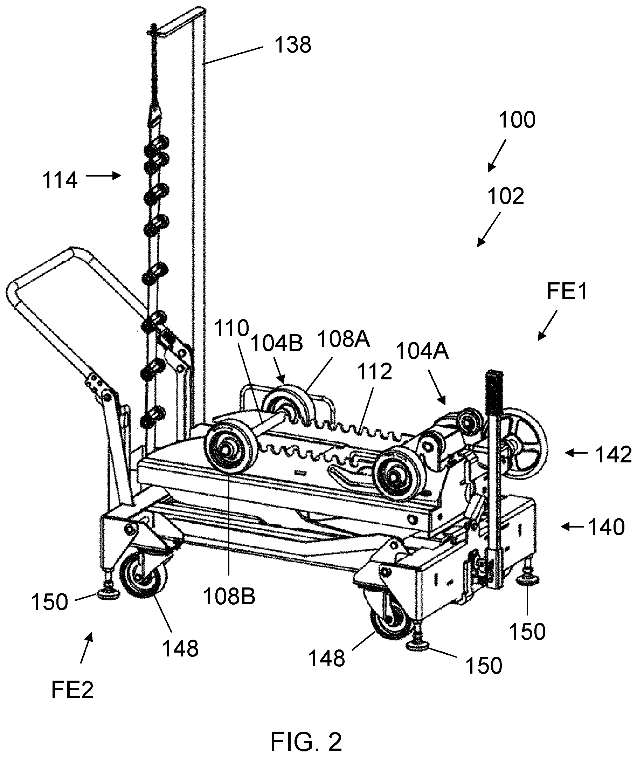

In an embodiment, the frame 102 comprises slots 112 arranged consecutively in a longitudinal direction of the frame wherein the slots are configured to receive the axle 110 of the roller 104A - B. The slot holds the axle of the roller. The adjustment of the distance between the rollers may be done with the slots. Referring to Figure 1 and 2, the frame 102 comprises a plurality of the consecutive slots 112 extending, at least partly, from a first end FE1 of the frame 102 towards a second end FE2 of the frame 102. The adjustment of the distance between the rollers 104A - B may be done by setting the rollers into the slots that corresponds the diameter of the pipe. For example, the fist roller 104A may be set into the slot that is at the first end FE1 of the frame 102 and if the diameter of the pipe 106 is small, the second roller 104B may also be set into the slot that is in vicinity of the first end FE1 of the frame 102. This situation is illustrated in Figure 1. Respectively if the diameter of the pipe 106 is large the second roller 104B may set into the slot 112 that is more further from the first end FE1 of the frame 102, this situation is illustrated in Figure 2, for example. The pipe is not illustrated in Figure 2. So, the distance between the rollers is the largest when rollers are set into the slots that are the most distant from each other, and respectively the distance is the smallest when the rollers are set into the slots that are close(st) each other. Or as close as the rollers can be set in relation to each other, because it may be possible that rollers cannot be set into the slot that are next each other due to the wheels of the first and the second rollers. Distances between the slots are configured to correspond the different diameters of the pipe to provide the optimal support for the pipes having different diameters.

In an embodiment, the first roller 104A may be stationary (fixed on the frame) and the second roller 104B may be movable. The first roller may be placed at the first end of the frame. Then the adjustment of the distance between the rollers may be done by moving the second roller into the slot that corresponds the diameter of the pipe. As discussed above, the more the second roller is moved towards the second end of the frame, the larger pipe can be received by the rollers and vice versa.

In an embodiment, at least one of the at least two rollers in the frame is configured to rotate the pipe placed on the at least two rollers. The roller may be coupled with a power source like, for example, an electric motor that is configured to provide rotational force for the roller(s). For example, as discussed above, the first roller 104A may be stationary and further coupled with the power source such that the first roller provides rotational force configured to rotate the pipe. The electric motor may be coupled with a battery and/or an electricity network.

Still referring to Figure 1, the pipe 106 is tightened against the at least two rollers 104A - B by the roller belt 114 having a plurality of roller elements 116. The roller elements 116 are configured to be in contact with the pipe 106 when the roller belt 114 is tightened. The roller belt extends from the first end FE1 of the frame 102 to the second end FE2 of the frame 102 such that it goes over the pipe 106 and presses the pipe 106 against the at least two rollers 104A - B of the frame 102. The roller belt holds the pipe in place during when using the arrangement allowing the rotation of the pipe. For example, the at least one of the at least two rollers 104A - B of the frame 102 may be configured to rotate the pipe 106 and the roller belt 114 ensures the proper contact (friction) between the pipe 106 and the rotating roller.

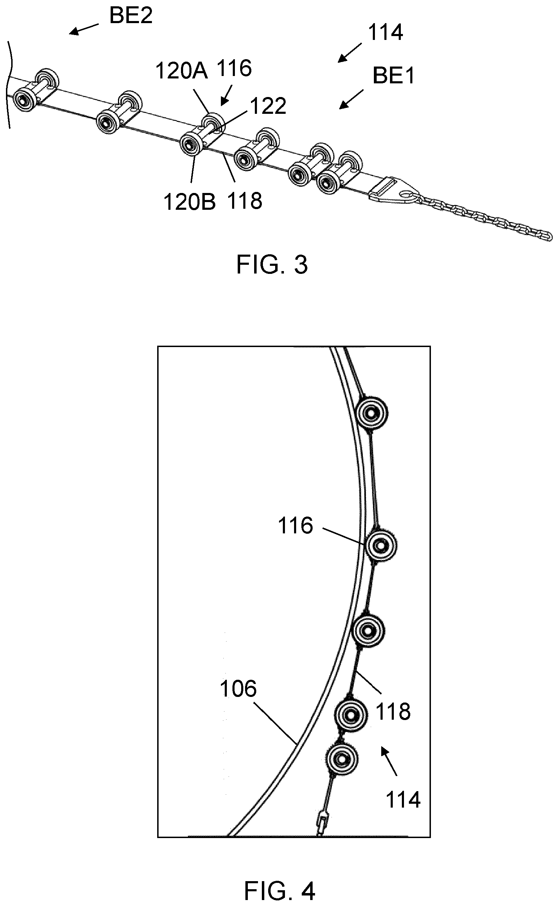

Referring to Figure 3, in an embodiment, the roller belt 114 comprises the roller elements 116 wherein a distance between the roller elements on the roller belt vary such that the distance is smaller in vicinity of a first end of the roller belt. The roller belt 114 comprises a belt 118 to which the roller elements 116 are coupled. The distance between the roller elements 116 on the roller belt 114 is smaller at a first end BE1 of the roller belt 114. The smaller distance of the roller elements at the first end enables optimal use of the roller belt with the smaller pipes. When the diameter of the pipe is smaller, the rolling elements shall be placed close to each other on the roller belt to ensure proper function of the roller belt. In other words, the distance between the roller elements shall be small. Respectively, when the diameter of the pipe is large, the roller elements are placed more far away from each other. In other words, the distance between the roller elements shall be larger.

In an embodiment, illustrated in Figure 4, the roller elements 116 in the roller belt 114 are arranged such that there is a gap between the belt 118 of the roller belt 114 and the pipe 106 when the pipe 106 is tightened by the roller belt 114. Figure 4 illustrates a detailed view of the roller belt and the pipe having the large diameter wherein the belt is not in contact with the outer surface of the pipe.

If the distance between the roller elements is large there is a risk that a belt of the roller belt hit a surface of the rotating pipe. This may cause many issues. For example, the belt may get broken if it contacts the pipe when tightened. The pipe may also be hot because of the processing and heat can damage the belt. In worst case, heat may cut the belt. The contact between the belt and pipe also causes friction that makes rotation of the pipe difficult. Therefore, it is essential to avoid contact between the belt of the roller belt and the pipe. Only the roller elements of the roller belt shall be in contact with the pipe. If the diameter of the pipe is large, less roller elements are needed to keep the belt away from the pipe. This means that it does not make sense to have too many rollers because it rises cost of the roller belt and makes handling of the roller belt more difficult.

In an embodiment, the first roller 104A may be stationary and fixed at the first end FE1 of the frame 102 and when the pipe 106 having the small diameter is set on the rollers 104A - 104B, the second roller 104B is also in vicinity of the first end FE1 of the frame 102 as illustrated in Figure 1. When the pipe 106 is tightened by the roller belt 114, the first end BE1 of the belt 114 may be coupled to the first end FE1 of the frame 102 and guided over the pipe 106. Then the roller elements 116 at the first end BE1 of the roller belt 114, that are close to each other, go over the pipe 106 and presses the pipe 106 against the roller elements 104A - B. Therefore, the structure in which the distance between the roller elements at the first end of the roller belt is smaller, make possible to keep the belt away from the surface of the pipe having the small diameter.

Still referring to Figure 3, in an embodiment, the distance between the roller elements 116, at least at first, increases from the first end BE1 of the roller belt 114 to a second end BE2 of the roller belt 114. This means that the distance may be smaller at the first end and it increases towards the second end of the roller belt. It is still important to realise that at some point of the belt the distance between the roller elements may stay substantially the same, in other words, at first the distance increases and after some point it stays the same. The distance may even decrease in some case. For example, the distance may increase at first from the first end of the roller belt towards the second end and after some point, it may stay the same or even decrease. Still, the distance increases at first from the first end towards the second end nevertheless it may even decrease later on the belt (towards or at the second end). The increasing distance (spacing) make possible to use the same roller belt for the pipes having different diameters.

If the diameter of the pipe 106 is large, the distance between the first roller 104A and the second roller 104B is bigger and more roller belt is needed to tighten the pipe 106 against the rollers 104A - B. Increasing distance between the roller elements 116 towards the second end BE2 make the roller belt optimal also for tightening the pipes 106 having larger diameters. Increasing distance between the roller elements enables optimum amount of the roller elements to keep the belt of the roller belt away from the surface of the pipe, keep the amount of roller elements decent and allowing proper rotation of the pipe.

In an embodiment, spacing of the roller elements may be as follows: 45-50mm, 90-100mm, 140-150mm, 190-200mm, 220-230mm and 540-550mm. One dimension range refers to the distance between the roller elements. For example, the distance between a first and a second roller elements may be 45-50mm, the distance between the second and a third roller elements may be 90-100mm and the distance between the third and a fourth roller elements may be 140-150mm and so on. As discussed above, the distance may not increase between every roller element. For example, distance between the third and fourth, the fourth and fifth and the fifth and sixth roller element may be same in some case.

In an embodiment, the material of the belt of the roller belt comprises polyester. The material may also be any other suitable material. The "term" belt may refer to belts used in lashing systems (lashing belts for cargo), for example. A length of the roller belt may be adjusted according to the need, it may be 3 - 5 meters, for example. A width of the roller belt may vary according to the needs, it may be 20 - 50 millimetres, for example.

Conventionally the pipe is supported and pressed against the rollers by a mechanical rigid presser that makes the structure of the pipe rotator heavy and large and usability is often challenging. Further, the adjusting the mechanical rigid presser for pipes having a plurality of the diameters is also challenging. Above mentioned drawback can be solved by the roller belt according to the invention.

The belt has many advantages compared to a chain, for example. The belt is much lighter and more flexible than chain and hence, it is much easier to use and more suitable for supporting and pressing the pipe.

Referring to Figure 3, in an embodiment, the roller element 116 comprises at least two wheels 120A - B arranged side by side on both sides of the roller belt 114. The adjacent wheels on the both side of the belt gives optimal support for the pipe and enables optimal rotation of the pipe. In an embodiment, a material of wheels comprises plastic that can tolerate heat. The plastic wheels do not scratch the surface of the pipe when the roller belt is tightened. A diameter of wheel may be selected according to the need. It may be 20 - 80mm, for example. The diameter of the wheel may affect the distance between the roller elements. The bigger the wheels are, the larger the distance between the roller elements can be.

Still referring to Figure 3, in an embodiment, the at least two wheels 120A - B of the roller element 116 are coupled by an axle 122. The wheels may be coupled to both ends of the axle and the axle may be coupled with the belt. The belt may be arranged to be substantially in the middle of the wheel(s) of the roller elements in a vertical direction. Then it does not matter which side of the roller belt is up or down. In an embodiment, the belt may be arranged such that it is not in the middle of the wheel(s) of the roller elements in the vertical direction. Then a distance from a surface of the belt 118 to a surface of the wheel 120 in the vertical direction varies such that in a first side of the belt is shorter than on the other side. Turing of the belt may then make possible to get the belt closer or more far away from the surface of the pipe. In other words, if the second side of the belt is against the pipe, the belt is more far away from the surface of the pipe and vice versa.

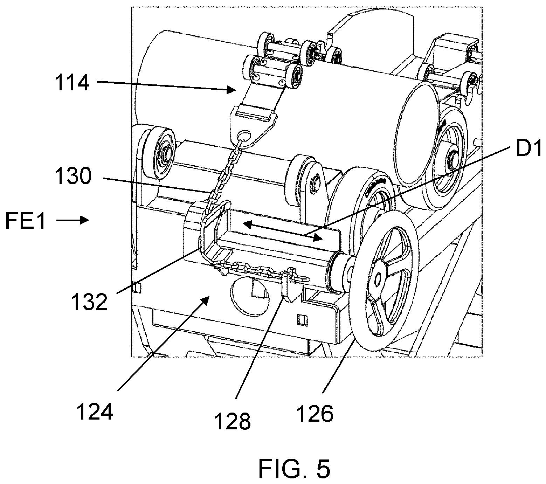

In an embodiment, the frame further comprises a tightening mechanism configured to tighten the roller belt such that one end of the roller belt is coupled with the tightening mechanism. Referring to Figure 5, the frame 102 further comprises the tightening mechanism 124 configured to tighten the roller belt 114 around the pipe 106. Figure 5 is a detailed view the first end FE1 of the frame. For example, the first end EB1 of the roller belt 114 may be coupled with the tightening mechanism 124. The tightening mechanics may be in the first end FE1 of the frame 102 as illustrated in Figure 5. The tightening mechanics may be automatic and/or manual. For example, pre-tightening may be performed manually and final tightening automatically. The automatic tightening mechanics may comprise an electric motor configured to provide force for tightening, for example.

Still referring to Figure 5, in an embodiment. the tightening mechanism 124 comprises a rotating handle 126 wherein rotating of the rotating handle 126 is configured to tighten the roller belt 114. The rotating handle 126 may be coupled with a threaded bar (not illustrated in Figures) such that rotational movement of the handle rotates the threaded bar. The tightening mechanics may further comprise a holder 128 to which the one end of the roller belt is coupled. The holder 128 may be coupled with the threaded bar such that rotation of the threaded bar moves the holder. This movement tighten the roller belt. The rotation of the handle to a first direction may tighten the roller belt and respectively, rotation to a second direction may loosen the roller belt.

In an embodiment, the roller belt 114 comprises means for coupling the one end of the roller belt 114 with the holder 128. The means for coupling the one end of the roller belt 114 with the holder 128 may comprise a chain 130 wherein one loop of the chain is coupled with the holder 128.

Referring to Figure 5, in an embodiment, the holder 128 may move in a direction D that is perpendicular to the longitudinal direction of the frame and the roller belt. There may be a reversion member 132 configured to turn the direction of the chain 130 at one end of the roller belt 114 such that it is accordant with the movement of the holder 128. This enables tightening of the roller belt with the holder that moves perpendicularly in relation to the roller belt.

In an embodiment, the tightening mechanics comprises releasing member to release and loosen the tightened roller belt. The

In an embodiment, the tightening mechanism comprises a ratchet (and pawl) mechanism configured to tighten the roller belt.

Referring to Figure 1, in an embodiment, the frame 102 further comprises a stopper member 134 configured to prevent movement of the roller belt 114 during tightening. The stopper member may be configured to receive the roller element 116 of the roller belt 114. The stopper member may be in the second end FE2 of the frame 102. This means that it is in the opposite end of the frame than the tightening mechanism 122 and the roller belt 114 goes from the first end FE1 of the frame 102 to the second end FE2 of the frame 102 and the pipe 106 stay under the roller belt 114 such that the roller belt 114 is capable of tightening the pipe 106 against the at least two roller elements 104A - B. The stopper member may comprise a slot(s) on both sides of the structure for the wheels of the roller element such that there is a hole in the middle of the stopper member for the belt.

In an embodiment, the stopper member may be moveable allowing more exact adjusting of the tightening of the roller belt. The stopper element may move, for example in the longitudinal, a width and/or a vertical direction of the frame.

Referring to Figure 1, in an embodiment, the frame 102 further comprises a support member 136 for supporting the roller belt 114 when tightened. The support member may be a bar, and the roller belt is configured to be guided under the bar if the diameter of the pipe tightened by the roller belt is small as illustrated in Figure 1. Technical effect of the support member is that the tightening of the smaller pipes is more efficient. For example, if the stopper member is at the second end of the frame and the tightening mechanism is at the first end of the frame, there is a risk that roller belt does not press and tight properly the pipes having the smaller diameter. The roller belt may be in contact with the pipe just on the top of the pipe. In this case, for example, just one or two roller elements may be in contact with the pipe which is not optimal. The support member presses the roller belt down such that the roller belt follows a circular shape of the pipe better and more roller elements are in contact with the pipe.

Referring to Figure 2, in an embodiment, the arrangement 100 further comprises a holding member 138 configured to hold the roller belt 114 before tightening. The holding member may be a bar/pipe on the frame extending substantially upwards from the frame as illustrated in Figure 2, for example. It may further comprise a hook or similar feature to which the roller belt may be set. As discussed, the roller belt 114 may be guided from the second end FE2 of the frame 102, where the stopper member is, to the first end FE1 of the frame 102, where the tightening mechanics is, when tightening the roller belt 114. For example, when the roller belt is coupled with the stopper member, it might be difficult to route the roller belt over the pipe which diameter is, for example, 1000mm and then couple the roller belt with the tightening mechanism. Technical effect of the holding member is to make the routing of the roller belt over the pipe easier. The holding member rises the roller belt up such that an operator, who is operating with the pipe rotating arrangement, can easily take the roller belt from the holding member and couple it with the tightening mechanism. For example, the operator may first go the second end of the frame and couple the roller belt with the stopper member and then put the roller belt to the holding member. Then the operator may go the first end of the frame and take the roller belt from the holding member and route it over the pipe and further couple it with the tightening mechanism. This is very helpful especially with the pipes having large diameter.

In an embodiment, illustrated in Figure 2, the frame 102 comprises a lower part 140 and a first interchangeable upper part 142 coupled with the lower part 140, wherein the at least two rollers 104A - B and the roller belt 114 are arranged in the first interchangeable upper part 142. The lower part 140 is configured to receive a plurality of the interchangeable upper parts having different technical properties. Interchangeable refers to the removable structure than can be removed with or without tools. The lower part is a platform structure enabling use of the same lower part of the frame in a plurality of purposes by changing the upper part. The interchangeable upper part may be coupled with the lower part, for example, by one or more pins, bolts and/or screws. In an embodiment, the interchangeable upper part may be coupled with the lower part by a quick clamping means.

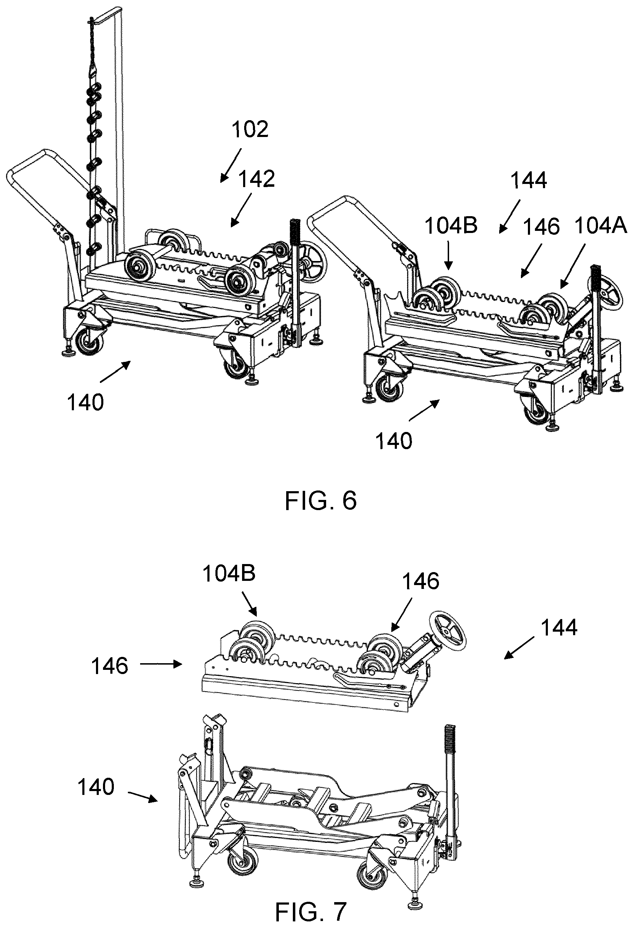

In an embodiment, illustrated in Figure 6 and 7, the arrangement 100 further comprises a second frame 144 having the lower part 140 and a second interchangeable upper part 146 coupled with the lower part 140, wherein the second interchangeable upper part 146 comprises at least two rollers 104A - B configured to receive the pipe 106. The arrangement 100 may then comprise the first frame 102, which is a main frame, used to rotate the pipe and the second frame 142, which is which is an assessor frame, used to support the pipe 106 if the pipe is long. It I important to realize that the main and accessory frames are not aligned in Figure 6 such that the pipe can be placed on the both of the frames. The second frame 144 comprises also at least two rollers configured to receive the pipe 106 to be rotated. In an embodiment, the rollers in the second frame are configured to allow rotational movement of the pipe about the centre axis of the pipe, and further movement of the pipe along the centre axis of the pipe. The centre axis of the pipe is illustrated in Figure 1. This make possible to adjust the position of the second frame and/or the pipe in relation the first frame when the second frame is used.

The second frame may not comprise the roller(s) that are configured to rotate the pipe. In an embodiment, the roller belt is not used in the second frame. Hence, the second frame may be simplified version of the first frame for supporting the long pipe to be processed. The first and second frame 102, 144 both may comprise the same lower part 140 but the different interchangeable upper parts 140, 146. This enables very efficient way to build two separate frames used for rotating and processing the pipe.

Referring to figure 2, in an embodiment, the lower part of the frame comprises swivelled retractable wheels 148 for enabling movement of the pipe rotating arrangement 100 and pedestals 150 for preventing movement of the arrangement 100 such that when the wheels 148 are retracted, the arrangement 100 is placed on the pedestals 150. The frame may comprise, for example, four wheels arranged in the lower part of the frame. The frame may further comprise, for example, four pedestals arranged in the lower part of the frame. The arrangement may comprise a mechanism configured to turn the wheels on such that when the wheels are on, the arrangement can be moved. Respectively, the mechanism may be configured to turn off (retract) the wheels such that when the wheels are turned off (retracted), the frame is on the pedestals. The pedestals are configured to hold the frame in place. The pedestals are used, for example, when using the pipe rotating arrangement. The swivelled refers to the wheels in which the wheel(s) rotate about wheel's centre axis and in addition, the wheel rotate about an axis that is vertical and perpendicular to the centre axis of the wheel. The swivelled wheels are well known in an industry and are also known as castor wheels.

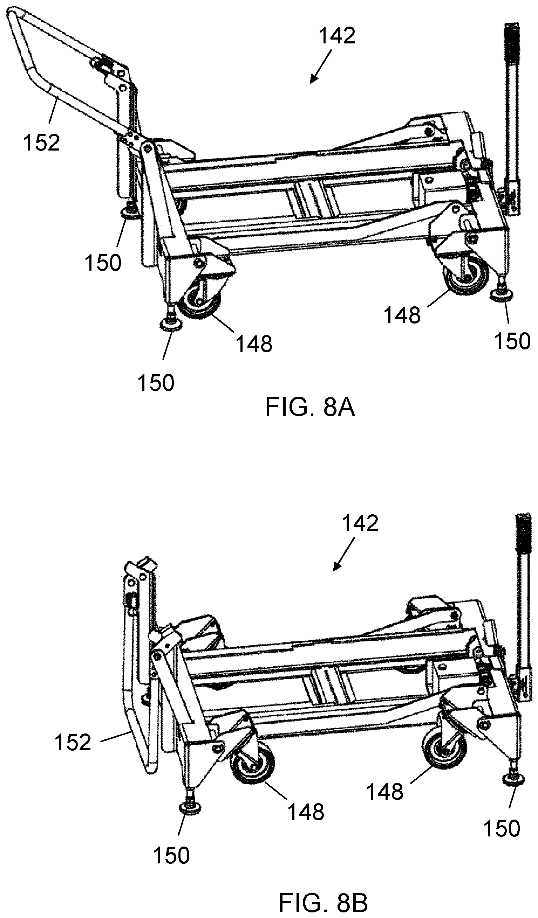

Referring to Figures 8A and 8B, in an embodiment, the arrangement 100 further comprises a handle 152 for moving the arrangement 100 wherein the handle 152 is coupled with the retractable wheels 148 such that when the handle 152 is lifted up, the wheels 148 are turned on and when the handle 152 is pressed down, the wheels 148 are retracted (turned off). Figures 8A and 8B illustrates only the lower part of the frame because of the clarity. The handle may have upper and lower states such that the handle is in the upper state when the handle is lifted up and respectively, the handle is in the lower state when the handle is pressed down. The upper state of the handle is illustrated in Figure 8A such that wheels are on and the lower state of the handle is illustrated in Figure 8B such that the frame is on the pedestals and wheels are retracted. The lower part of the frame may comprise a mechanism configured to transmit movement of the handle to the wheels. The handle may be turned against the frame in the lower position such that it does not prevent movement of the operator around the arrangement, this is illustrated in Figure 8B.

The handle may be coupled with a locking member configured to prevent the movement of the handle. The locking member may have a locked state and an unlocked state. The locking member must be turned to unlocked state when moving the handle up or down, in other words, the unlocked state of the locking member allows the movement of the handle. For example, when the handle is in the upper position and the wheels are on, the locking member may automatically move to the locked state. If the operator wants to turn the wheel off, he/she must release the locking member to the unlocked state.

In an embodiment, at least one of the swivelled retractable wheels 148 comprises a releasable locking element for preventing swivelling of the wheel 148 when the wheels 148 are turned on. As described, swivelling refers to rotation of the wheel about the vertical axle that is perpendicular to the centre axis of the wheel. The locking element prevent rotation in this direction. The wheel rotates normally around its centre axis also when the locking element is turned on. The locking member may be configured to lock the wheel such that the frame can be moved in the longitudinal direction of the frame. In other words, forwards and backwards. Technical effect of the feature is that it makes the movement of the frame easier. When all the wheels are swivelled it may be difficult to move the frame directly forward and/or backward, especially if a floor (ground) is inclined. Locking of the one wheel such that the wheel rotates only normally around its centre axis, make movement much easier. The locking is releasable so by releasing the locking of the at least one wheel, the frame may be moved sideways (in a side direction).

In an embodiment, illustrated in Figure 1, the arrangement 100 may further comprise a storage member 154 for the roller belt 114. The storage member may be used to store the excess roller belt when it is tightened and/or to store the roller belt when is no in use. The storage member may be placed on the second end of the frame. The storage member may be a box, for example.

In an embodiment, the belt of the roller belt may comprise a plurality of pieces coupled together to form the belt having desired length.

In an embodiment, a location of the roller elements in the roller belt is adjustable. Then distance between the roller elements may be adjusted according to the needs. The belt may have marks indicating the optimum location for the roller elements according to the diameter of the pipe.

In an embodiment, the roller belt comprises marks for indicating which roller element should be placed into the stopper member according to the diameter of the pipe. For example, there may be indication that if 1000mm pipe is used put this roller element into the stoper member.

The next example describes how the pipe rotating arrangement may be used in practise. The distance between the at least two rollers of the main frame (the first frame) are adjusted according to the diameter of the pipe going to be processed. The pipe is arranged on the top of the rollers. One end of the roller belt is locked into the stopper member and the belt is routed over the pipe such that the pipe is between the roller belt and the at least two rollers. Only wheels of the roller elements of the roller belt is in contact with the outer surface of the pipe in addition to the at least two rollers of the frame. The roller elements are configured such that there is optimal amount of the rolling elements in use despite the diameter of the pipe. Then operator can just route the belt over the pipe and set one end of the roller belt to the tightening mechanism for tightening the roller belt. The operator may set the roller belt to the holding member that make easier to route the roller belt over the pipe and to the tightening mechanism when the roller belt is assembled into the stopper member. The arrangement may further comprise the accessory frame configured to support the pipe if the pipe is long. The accessory frame may have the same lower part as in the main frame, but the upper part is different such that the are just at least two roller elements and in some case the roller belt.

The pipe roller arrangement disclosed in this application provides very effective and a user-friendly solution for rotating the pipes. It can alleviate may of the drawbacks of the known solution.

It will be obvious to a person skilled in the art that, as technology advances, the inventive concept can be implemented in various ways. The invention and its embodiments are not limited to the example embodiments described above but may vary within the scope of the claims.

## Claims

1. A pipe rotating arrangement (100), comprising:
a frame (102) having at least two rollers (104A - B) configured to receive a pipe (106) to be rotated wherein a distance between the at least two rollers (104A - B) is adjustable; and
a roller belt (114) configured to tighten the pipe (106) against the at least two rollers (104A - B) wherein the roller belt (114) comprises a plurality of roller elements (116) enabling rotation of the pipe (106) when tightened against the at least two rollers (104A - B) by the roller belt (114),
**characterized in that** a distance between the roller elements (116) on the roller belt (114) vary such that the distance is smaller in vicinity of a first end (BE1) of the roller belt (114).

2. The pipe rotating arrangement (100) of claim 1, wherein the distance between the roller elements (116), at least partly, increases from the first end (BE1) of the roller belt (114) to a second end (BE2) of the roller belt (114).

3. The pipe rotating arrangement (100) of any preceding claim, wherein the roller element (116) comprises at least two wheels (120A - B) arranged side by side on both sides of the roller belt (114).

4. The pipe rotating arrangement (100) of claim 3, wherein the at least two wheels (120A - B) of the roller element (116) are coupled by an axle (122).

5. The pipe rotating arrangement (100) of any preceding claim, wherein there is a gap between a belt (118) of the roller belt (114) and the pipe (106) when the pipe (106) is tightened by the roller belt (114).

6. The pipe rotating arrangement (100) of any preceding claim, wherein the frame (102) further comprises a tightening mechanism (124) configured to tighten the roller belt (114) such that one end of the roller belt (114) is coupled with the tightening mechanism (124).

7. The pipe rotating arrangement (100) of claim 6, wherein the tightening mechanism (124) comprises a rotating handle (126) wherein rotating of the rotating handle (126) is configured to tighten the roller belt (114).

8. The pipe rotating arrangement (100) of any preceding claim, wherein the frame (102) further comprises a stopper member (134) configured to receive the roller element (116) of the roller belt (114) and to prevent movement of the roller belt (114) when tightening the roller belt (114).

9. The pipe rotating arrangement (100) of any preceding claim, wherein the frame (102) further comprises a support member (136) for support the roller belt (114) when tightened.

10. The pipe rotating arrangement (100) of any preceding claim, wherein the arrangement (100) further comprises a holding member (138) configured to hold the roller belt (114) before tightening.

11. The pipe rotating arrangement (100) of any preceding claim, wherein the frame (102) comprises a lower part (140) and a first interchangeable upper part (142) coupled with the lower part (140), wherein the at least two rollers (104A - B) and the roller belt (114) are arranged in the first interchangeable upper part (142).

12. The pipe rotating arrangement (100) of any preceding claim, wherein the arrangement (100) further comprises a second frame (144) having the lower part (140) and a second interchangeable upper part (146) coupled with the lower part (140), wherein the second interchangeable upper part (146) comprises at least two rollers (104A - B) configured to receive the pipe (106).

13. The pipe rotating arrangement (100) of any preceding claim, wherein the lower part (140) of the frame (102) comprises swivelled retractable wheels (148) for enabling movement of the pipe rotating arrangement (100) and pedestals (150) for preventing movement of the arrangement such that when the wheels (148) are retracted, the arrangement is placed on the pedestals (150).

14. The pipe rotating arrangement (100) of claim 13, wherein the arrangement (100) further comprises a handle (152) for moving the arrangement (100) wherein the handle (152) is coupled with the retractable wheels (148) such that when the handle (152) is lifted up, the wheels (148) are turned on and when the handle (152) is pressed down, the wheels (148) are retracted.

15. The pipe rotating arrangement (100) of claims 13 or 14, wherein at least one of the swivelled retractable wheels (148) comprises a locking element for preventing swivelling of the wheel (148) when the wheels (148) are turned on.

## Patentansprüche

1. Rohrdrehanordnung (100), umfassend:
einen Rahmen (102), der mindestens zwei Rollen (104A - B) aufweist, die dazu ausgestaltet sind, ein Rohr (106) aufzunehmen, das zu drehen ist, wobei ein Abstand zwischen den mindestens zwei Rollen (104A - B) verstellbar ist; und
ein Rollenband (114), das dazu ausgestaltet ist, das Rohr (106) gegen die mindestens zwei Rollen (104A - B) festzuziehen, wobei das Rollenband (114) eine Vielzahl von Rollenelementen (116) umfasst, die Drehung des Rohrs (106) ermöglichen, wenn es mittels des Rollenbandes (114) gegen die mindestens zwei Rollen (104A - B) festgezogen ist,
**dadurch gekennzeichnet, dass** ein Abstand zwischen den Rollenelementen (116) auf dem Rollenband (114) derart variiert, dass der Abstand in einer Nachbarschaft eines ersten Endes (BE1) des Rollenbandes (114) kleiner ist.

2. Rohrdrehanordnung (100) nach Anspruch 1, wobei der Abstand zwischen den Rollenelementen (116) zumindest teilweise von dem ersten Ende (BE1) des Rollenbandes (114) zu einem zweiten Ende (BE2) des Rollenbandes (114) zunimmt.

3. Rohrdrehanordnung (100) nach einem der vorhergehenden Ansprüche, wobei das Rollenelement (116) mindestens zwei Räder (120A - B) umfasst, die nebeneinander auf beiden Seiten des Rollenbandes (114) angeordnet sind.

4. Rohrdrehanordnung (100) nach Anspruch 3, wobei die mindestes zwei Räder (120A - B) des Rollenelements (116) durch eine Achse (122) gekoppelt sind.

5. Rohrdrehanordnung (100) nach einem der vorhergehenden Ansprüche, wobei eine Lücke zwischen einem Band (118) des Rollenbandes (114) und dem Rohr (106) vorhanden ist, wenn das Rohr (106) mittels des Rollenbandes (114) festgezogen ist.

6. Rohrdrehanordnung (100) nach einem der vorhergehenden Ansprüche, wobei der Rahmen (102) ferner einen Festziehmechanismus (124) umfasst, der dazu ausgestaltet ist, das Rollenband (114) derart festzuziehen, dass ein Ende des Rollenbandes (114) mit dem Festziehmechanismus (124) gekoppelt ist.

7. Rohrdrehanordnung (100) nach Anspruch 6, wobei der Festziehmechanismus (124) einen Drehgriff (126) umfasst, wobei ein Drehen des Drehgriffs (126) dazu ausgestaltet ist, das Rollenband (114) festzuziehen.

8. Rohrdrehanordnung (100) nach einem der vorhergehenden Ansprüche, wobei der Rahmen (102) ferner ein Stopper-Element (134) umfasst, das dazu ausgestaltet ist, das Rollenelement (116) des Rollenbandes (114) aufzunehmen und Bewegung des Rollenbandes (114) beim Festziehen des Rollenbandes (114) zu verhindern.

9. Rohrdrehanordnung (100) nach einem der vorhergehenden Ansprüche, wobei der Rahmen (102) ferner ein Stützelement (136) zum Stützen des Rollenbandes (114), wenn es festgezogen ist, umfasst.

10. Rohrdrehanordnung (100) nach einem der vorhergehenden Ansprüche, wobei die Anordnung (100) ferner ein Halteelement (138) umfasst, das dazu ausgestaltet ist, das Rollenband (114) vor dem Festziehen zu halten.

11. Rohrdrehanordnung (100) nach einem der vorhergehenden Ansprüche, wobei der Rahmen (102) einen unteren Teil (140) und einen ersten wechselseitig austauschbaren oberen Teil (142) umfasst, der mit dem unteren Teil (140) gekoppelt ist, wobei die mindestens zwei Rollen (104A - B) und das Rollenband (114) in dem ersten wechselseitig austauschbaren oberen Teil (142) angeordnet sind.

12. Rohrdrehanordnung (100) nach einem der vorhergehenden Ansprüche, wobei die Anordnung (100) ferner einen zweiten Rahmen (144) umfasst, der den unteren Teil (140) und einen zweiten wechselseitig austauschbaren oberen Teil (146) aufweist, der mit dem unteren Teil (140) gekoppelt ist, wobei der zweite wechselseitig austauschbare obere Teil (146) mindestens zwei Rollen (104A - B) umfasst, die dazu ausgestaltet sind, das Rohr (106) aufzunehmen.

13. Rohrdrehanordnung (100) nach einem der vorhergehenden Ansprüche, wobei der untere Teil (140) des Rahmens (102) einziehbare Schwenkräder (148) zum Ermöglichen von Bewegung der Rohrdrehanordnung (100) und Füße (150) zum Verhindern von Bewegung der Anordnung umfasst, derart dass, wenn die Räder (148) eingezogen sind, die Anordnung auf den Füßen (150) platziert wird.

14. Rohrdrehanordnung (100) nach Anspruch 13, wobei die Anordnung (100) ferner einen Griff (152) zum Bewegen der Anordnung (100) umfasst, wobei der Griff (152) derart mit den einziehbaren Rädern (148) gekoppelt ist, dass, wenn der Griff (152) angehoben wird, die Räder (148) in die Betriebsstellung gebracht werden, und wenn der Griff (152) nach unten gedrückt wird, die Räder (148) eingezogen werden.

15. Rohrdrehanordnung (100) nach Anspruch 13 oder 14, wobei mindestens eines der einziehbaren Schwenkräder (148) ein Verriegelungselement zum Verhindern eines Schwenkens des Rades (148) umfasst, wenn die Räder (148) sich in der Betriebsstellung befinden.

## Revendications

1. Agencement de rotation de tuyau (100) comprenant :
un cadre (102) ayant au moins deux rouleaux (104A - B) configurés pour recevoir un tuyau (106) destiné à être entraîné en rotation, dans lequel une distance entre les au moins deux rouleaux (104A - B) est réglable ; et
une courroie à rouleaux (114) configurée pour serrer le tuyau (106) contre les au moins deux rouleaux (104A - B), dans lequel la courroie à rouleaux (114) comprend une pluralité d'éléments formant rouleaux (116) permettant la rotation du tuyau (106) lorsqu'il est serré contre les au moins deux rouleaux (104A - B) par la courroie à rouleaux (114),
**caractérisé en ce qu'**une distance entre les éléments formant rouleaux (116) sur la courroie à rouleaux (114) varie de sorte que la distance est moindre à proximité d'une première extrémité (BE1) de la courroie à rouleaux (114).

2. Agencement de rotation de tuyau (100) selon la revendication 1, dans lequel la distance entre les éléments formant rouleaux (116), augmente au moins partiellement à partir de la première extrémité (BE1) de la courroie à rouleaux (114) à une seconde extrémité (BE2) de la courroie à rouleaux (114).

3. Agencement de rotation de tuyau (100) selon l'une quelconque des revendications précédentes, dans lequel l'élément formant rouleau (116) comprend au moins deux roues (120A - B) agencées côte à côte sur les deux côtés de la courroie à rouleaux (114).

4. Agencement de rotation de tuyau (100) selon la revendication 3, dans lequel les au moins deux roues (120A - B) de l'élément formant rouleau (116) sont couplées par un essieu (122).

5. Agencement de rotation de tuyau (100) selon l'une quelconque des revendications précédentes, dans lequel il y a un interstice entre une courroie (118) de la courroie à rouleaux (114) et le tuyau (106), lorsque le tuyau (106) est serré par la courroie à rouleaux (114).

6. Agencement de rotation de tuyau (100) selon l'une quelconque des revendications précédentes, dans lequel le cadre (102) comprend en outre un mécanisme de serrage (124) configuré pour serrer la courroie à rouleaux (114) de sorte qu'une extrémité de la courroie à rouleaux (114) est couplée avec le mécanisme de serrage (124).

7. Agencement de rotation de tuyau (100) selon la revendication 6, dans lequel le mécanisme de serrage (124) comprend une poignée rotative (126), dans lequel la rotation de la poignée rotative (126) est configurée pour serrer la courroie à rouleaux (114).

8. Agencement de rotation de tuyau (100) selon l'une quelconque des revendications précédentes, dans lequel le cadre (102) comprend en outre un élément de butée (134) configuré pour recevoir l'élément formant rouleau (116) de la courroie à rouleaux (114) et pour empêcher le mouvement de la courroie à rouleaux (114) lors du serrage de la courroie à rouleaux (114).

9. Agencement de rotation de tuyau (100) selon l'une quelconque des revendications précédentes, dans lequel le cadre (102) comprend en outre un élément de support (136) pour supporter la courroie à rouleaux (114) lorsqu'elle est serrée.

10. Agencement de rotation de tuyau (100) selon l'une quelconque des revendications précédentes, dans lequel l'agencement (100) comprend en outre un élément de maintien (138) configuré pour maintenir la courroie à rouleaux (114) avant le serrage.

11. Agencement de rotation de tuyau (100) selon l'une quelconque des revendications précédentes, dans lequel le cadre (102) comprend une partie inférieure (140) et une première partie supérieure interchangeable (142) couplée avec la partie inférieure (140), dans lequel les au moins deux rouleaux (104A - B) et la courroie à rouleaux (114) sont agencés dans la première partie supérieure interchangeable (142).

12. Agencement de rotation de tuyau (100) selon l'une quelconque des revendications précédentes, dans lequel l'agencement (100) comprend en outre un second cadre (144) ayant la partie inférieure (140) et une seconde partie supérieure interchangeable (146) couplée avec la partie inférieure (140), dans lequel la seconde partie supérieure interchangeable (146) comprend au moins deux rouleaux (104A - B) configurés pour recevoir le tuyau (106).

13. Agencement de rotation de tuyau (100) selon l'une quelconque des revendications précédentes, dans lequel la partie inférieure (140) du cadre (102) comprend des roues pivotées rétractables (148) pour permettre le mouvement de l'agencement de rotation de tuyau (100) et des piédestaux (150) pour empêcher le mouvement de l'agencement de sorte que lorsque les roues (148) sont rétractées, l'agencement est placé sur les piédestaux (150).

14. Agencement de rotation de tuyau (100) selon la revendication 13, dans lequel l'agencement (100) comprend en outre une poignée (152) pour déplacer l'agencement (100), dans lequel la poignée (152) est couplée avec les roues rétractables (148) de sorte que lorsque la poignée (152) est levée, les roues (148) sont activées et lorsque la poignée (152) est abaissée, les roues (148) sont rétractées.

15. Agencement de rotation de tuyau (100) selon les revendications 13 ou 14, dans lequel au moins l'une des roues pivotées rétractables (148) comprend un élément de verrouillage pour empêcher le pivotement de la roue (148) lorsque les roues (148) sont activées.
